# EUROPEAN PATENT APPLICATION

(11) **EP 1 949 974 A1**
(43) Date of publication of application: **30.07.2008**
(21) Application number: 07123794.5
(22) Date of filing: 20.12.2007
(51) Int. Cl.: B05B 15/06, A01M 7/00

(54) **Sprayer Assembly**

(30) Priority: 26.01.2007 US 627711
(71) Applicant: Deere & Company, Moline, IL 61265-8098 (US)
(72) Inventor: Beilke, Daniel A, Blain, IA 55449 (US); Caruso, Robert L, Cedar Falls, IA 50613 (US)
(74) Representative: Holst, Sönke

(57) **Abstract**

A sprayer assembly (50) or nozzle and bracket assembly having a minimal number of parts and particularly useful for mounting on a planter row unit includes a slotted bracket (60) connected by a single bolt (34) to the unit frame (20). A molded plastic nozzle body (80) includes mounting tabs (86, 86a, 86b) received by the bracket slots (66a). The body (80) snap fits into the bracket slots (66) and is guided into position past locking offsets (66b) by the slots (66a). A nozzle cap (84) threaded onto the body (80) constrains the body (80) against upward movement in the slots (66a) and transfers harmful impact forces away from the nozzle body (80).

## Description

The present invention relates generally to a sprayer assembly for mounting on the frame of an agricultural implement.

Liquid chemicals are often applied in bands or in furrow over an open furrow during planting operations. A typical application arrangement includes a spray nozzle for applying liquid pesticide or other chemical. The nozzle is supported in a bracket that is connected to the frame of a planter row unit by bolts at a location immediately rearwardly of the furrow opening disk. Space is extremely limited on the row unit frame, and the mounting of the entire spray assembly can be difficult and time consuming. The nozzle operates in a relatively harsh environment, and high impact forces can damage the spray assembly. Repair and replacement of the nozzle are inconvenient because of the limited space and number of mounting components.

According to the problems described above one object of the invention is to provide a sprayer assembly which has a minimal number of parts and which is easy to mount and to replace on a planter row unit.

The object as described above will be solved by the teaching of claim 1. Further advantageous embodiments of the invention are defined in the accompanying claims.

According to the invention a sprayer assembly as described above comprises a bracket with a slotted wall, a nozzle body having projecting tab structure for receipt in the slotted wall and a single connector for securing the bracket to the frame.

In a preferred embodiment the slotted wall comprises parallel spaced slots receiving the tab structure, wherein the nozzle body is slidable along the slots to a mounted position. The slots include an offset, wherein the tab structure is slidably moveable in the slot relative to the offset and securing the nozzle body in the mounted position when the tab structure slides past the offset.

The sprayer assembly may further comprise a nozzle cap attachable to the nozzle body, wherein the nozzle cap when attached projects past a plane of the slotted wall and limiting sliding movement of the nozzle body along the slots away from the mounted position.

The bracket may include a leg structure projecting from the slotted wall into contact with the frame for stabilizing the bracket and the nozzle body.

In another preferred embodiment the single connector comprises a single bolt tightened against the bracket, wherein the single bolt and leg structure providing substantially all the support of the bracket and the nozzle body relative to the frame.

Furthermore the frame may include a frame casting bolted to the implement, wherein the single bolt also supports the frame casting. The frame may comprise a planter row unit frame. The frame casting may define a downwardly opening cavity, wherein the bracket is contained within the cavity.

In another preferred embodiment the bracket includes first and second bracket portions extending laterally from opposite ends of the slotted wall, wherein the first bracket portion is secured to the frame by the single connector and the second bracket portion is resilient and is biased against the frame.

In another preferred embodiment a sprayer assembly for mounting on the frame of an agricultural implement, comprises a bracket with a slotted wall lying generally in a plane and a nozzle body having projecting tab structure for receipt in the slotted wall, wherein the tab structure is movable in the slotted wall to an assembled position on the bracket. The sprayer assembly may comprise a nozzle cap attachable to and removable from the nozzle body, the nozzle cap when attached to the nozzle body limiting movement of the nozzle body away from the assembled position.

The bracket includes an upper wall connected by a single bolt to the frame and lower leg structure biased against the frame to stabilize the bracket and nozzle body.
The slotted wall may comprise parallel slots receiving the tab structure, wherein the slots include an offset, the tab structure slidable in the slot relative the offset and securing the nozzle body in the mounted position when the tab structure slides past the offset.

The nozzle cap when attached projects past the plane of the slotted wall and limits movement of the nozzle body along the slots away from the assembled position.

The slotted wall includes a lower edge, wherein the nozzle cap is positioned adjacent the lower edge when attached and contacts the lower edge as the nozzle body is urged upwardly to direct impact loading away from the nozzle body to the nozzle cap and the bracket.

The sprayer assembly comprises a single bolt tightened against the bracket, the single bolt and leg structure providing substantially all the support of the bracket and the nozzle body relative to the frame.

The frame includes a frame casting bolted to the implement, wherein the single bolt also supports the frame casting. The frame may comprise a planter row unit frame.

The frame casting defines a downwardly opening cavity and the bracket is contained within the cavity. The bracket includes first and second bracket portions extending laterally from opposite ends of the slotted wall, wherein the first bracket portion is secured to the frame by a single connector and the second bracket portion is resilient and is biased against the frame.

The sprayer assembly having a minimal number of parts and particularly useful for mounting on a planter row unit includes a slotted bracket connected by a single bolt to the unit frame. The bracket has extensions that conform to and abut the row unit frame casting to provide additional strength while facilitating easy access to the mounting bolt. A molded plastic nozzle body includes mounting tabs received by the bracket slots. The tabs snap fit into the bracket slots, and the nozzle body is guided into position by the slots. A nozzle cap threaded onto the body adjacent the bracket constrains the body against upward movement to provide a secure nozzle body connection and eliminate or minimize impact damage to the body. The easily replaceable cap contacts the bracket and protects the more costly nozzle body from damage. The assembly is easily installed in the limited space area of the row unit frame and can be conveniently accessed for servicing or changing a nozzle. The entire assembly has few total parts, is extremely compact and is relatively inexpensive to manufacture and install.

The present invention relates generally to spray nozzle assemblies for agricultural implements and, more specifically, to a nozzle assembly that is particularly useful for attachment on the frame of a seeding device such as a planter row unit.

These and other objects, features and advantages of the present invention will become apparent from the description below taken with the drawings.
Figure 1 is a side view of a planter row unit with a nozzle assembly attached.
Figure 2 is a bottom perspective view of the aft portion of the planter row unit of Figure 1 showing the nozzle support area with the nozzle assembly removed.
Figure 3 is a side view, partially in section, of a frame casting from the support area with the nozzle assembly attached.
Figure 4 is a perspective view of the nozzle assembly of Figure 3.
Figure 5 is a top view of the nozzle assembly.
Figure 6 is a rear view of the nozzle assembly showing the nozzle body in the mounted position on the nozzle bracket.
Figure 7 is a perspective view of the nozzle assembly illustrating the attachment features.

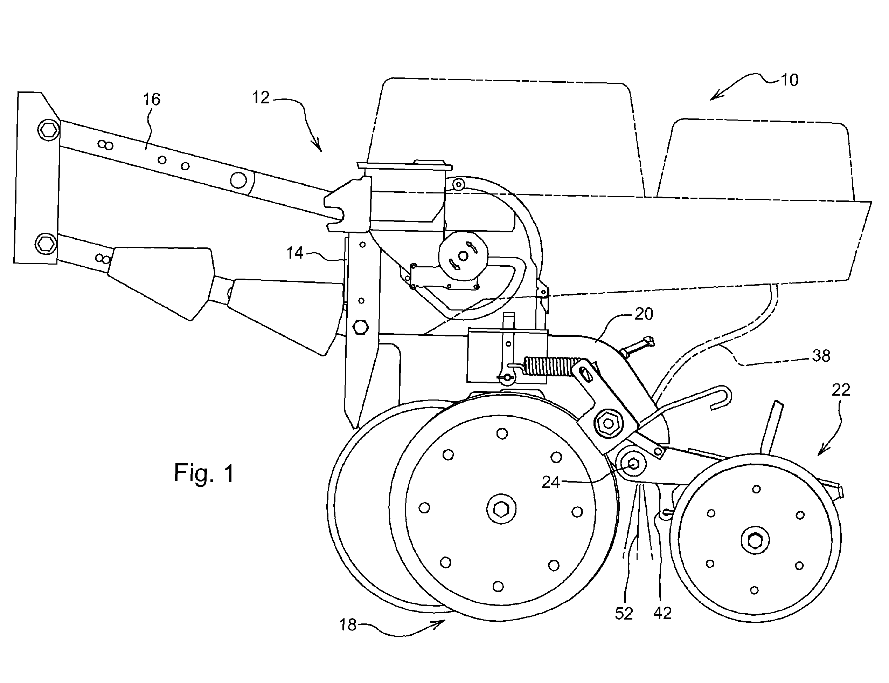

Referring to Figure 1 therein is shown a portion of a seeding device 10 adapted for movement over the soil for depositing seed in a furrow and closing the furrow over the seed. As shown, the seeding device 10 is a planter including a row unit 12 having a forward end 14 connected by a four-bar linkage 16 to a toolbar (not shown). Conventional furrow opening structure 18 with depth gauging is connected to an opener frame 20 and opens a furrow in the ground and deposits material such as seed and fertilizer in the furrow. Trailing press wheel structure 22 supported from the frame 20 at a pivot location 24 firms the soil over the deposited material.

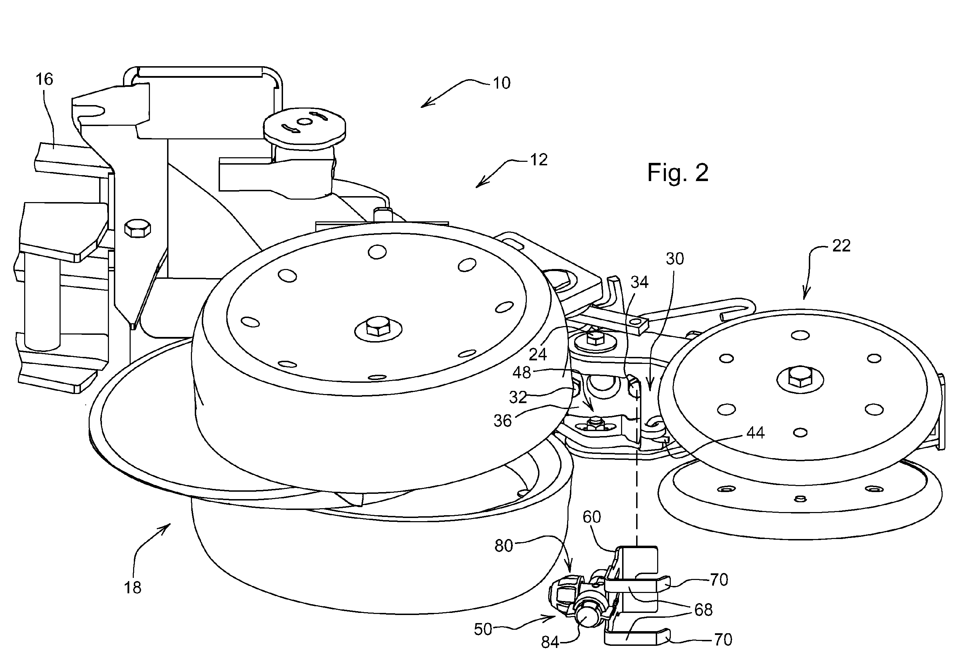

The opener frame 20 includes a frame casting 30 connected by bolts 32 and 34 (Figure 2) to an underside of the frame 20 immediately rearwardly of the opening structure 18. The casting 30 includes an upper apertured portion 36 receiving the bolts 32 and 34 and a chemical supply line 38. The casting 30 extends rearwardly and downwardly from the apertured portion 36 to a downwardly and forwardly extending mounting portion 40 that terminates at a lowermost end in an apertured mounting member 42 for receiving one end of a firming wheel down pressure spring 44. The casting 30 defines a downwardly and forwardly opening cavity indicated generally at 48. As best seen in Figure 2, access to the cavity area is relatively limited.

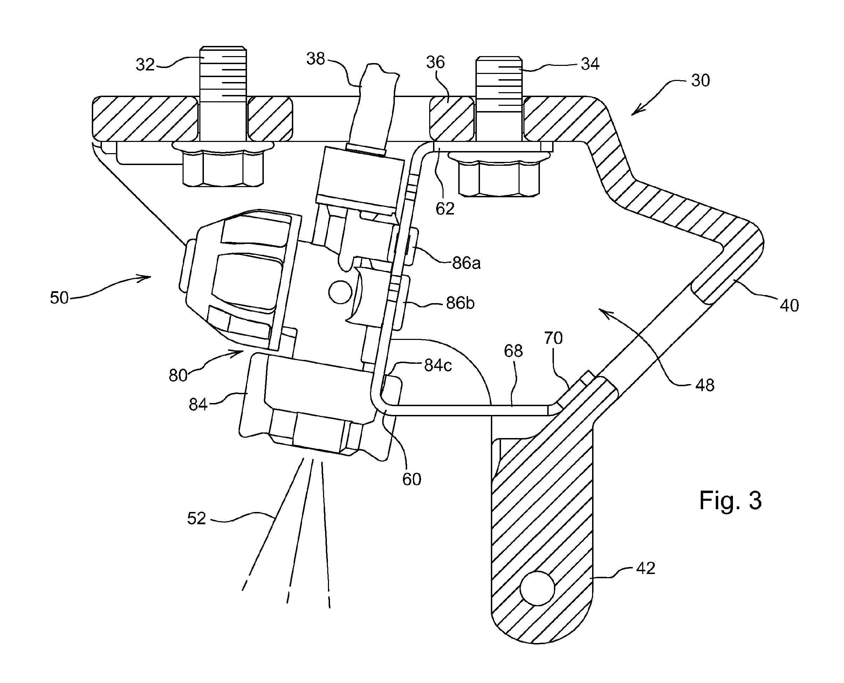

A sprayer assembly comprising a nozzle and bracket assembly 50 is secured generally within the cavity 48 by a single connector in form of the bolt 34. The supply line 38 feeds a chemical solution to the top of the assembly 50, and a chemical spray 52 (Figure 3) is emitted from the bottom of the assembly onto the area of the furrow near the rear of the opener assembly 18.

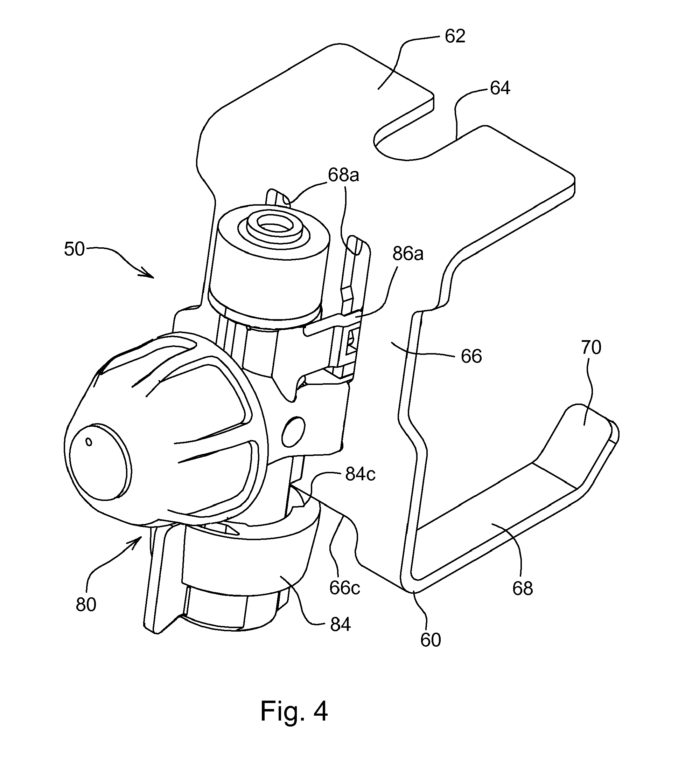

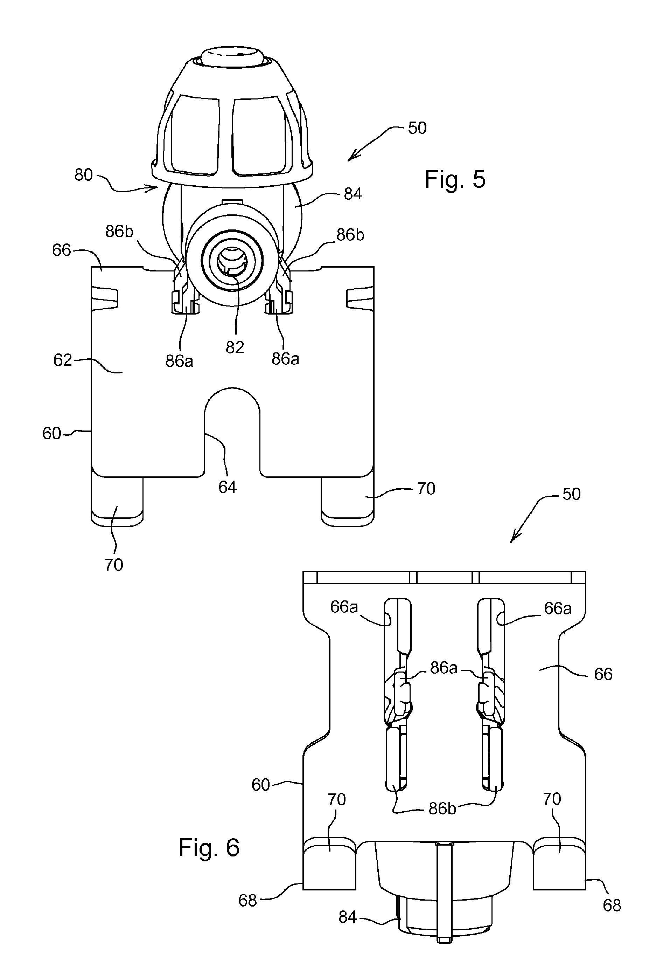

The assembly 50 includes a formed sheet metal bracket 60 having a generally horizontal top portion 62 with a slot 64 opening all the way through the rearmost edge of the portion (Figures 4 and 5). A forward and generally planar slotted wall 66 with spaced upright slots 66a extends downwardly and slopes slightly forwardly from the top portion 62. A leg structure comprising two identical legs 68 are bent rearwardly from the bottom and extend generally horizontally to upturned ends 70. The bolt 34 secures the top portion 62 against the bottom surface of the portion 36. The ends 70 of the legs 68 conform to and are resiliently supported against the inside wall of the mounting portion 40. As can be best appreciated from Figure 3, the bracket 60 is secured firmly in place in the cavity 48 using only the single bolt 34 and contact between the ends 70 and the casting 30. Therefore, although the space in the area of the cavity 48 is limited, attachment and removal of the assembly 50 is facilitated.

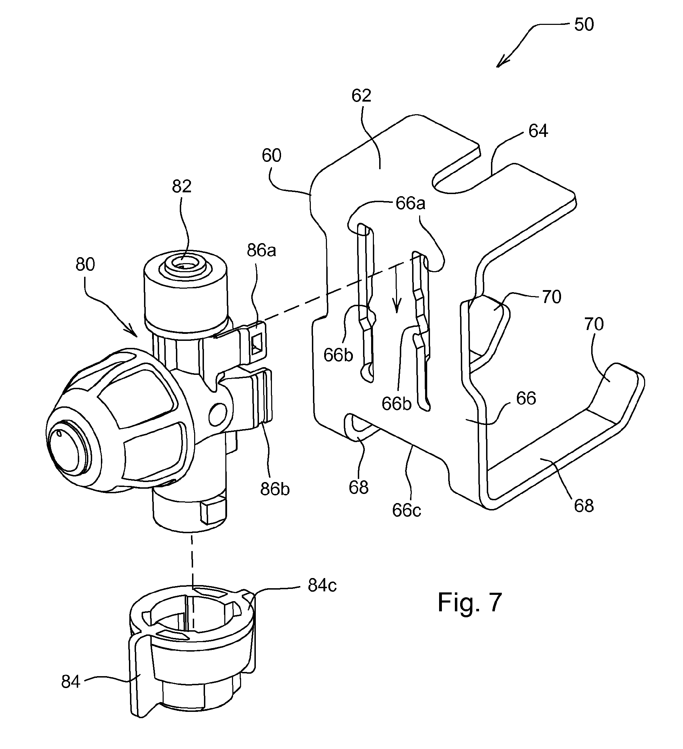

The assembly 50 also includes a nozzle body 80 having an upper inlet 82 connected to the supply line 38 and a nozzle cap 84 releasably mounted on the lower end of the body 80 and defining the spray pattern for the spray 52. The body 80 as shown is molded from plastic material and includes rearwardly projecting spaced upper and lower mounting tabs 86a and 86b received by the slots 66a in the wall 66. The tabs 86a and 86b extend through the slots 66a and embrace opposite edges of the slots for firm support by the slotted wall 66. The ends of the tabs 86 have laterally directed protrusions (Figure 7) to help secure the body 80 in the slots 66a. Also, the slots 66a have centrally located offsets 66b that contact the upper tabs 86a as the body 80 is slid downwardly into the final assembled position on the bracket 60. The offsets 66b help resist upward movement of the body 80 in the slots 66a and maintain the body 80 in the desired position.

For added assembly integrity and body impact protection, the nozzle cap 84, which is connected to the lower end of the body 80 after the body is slid into position on the bracket 60 by a conventional attachment structure such as a bayonet mount, overlaps the plane of the slotted wall 66 and contacts the wall 66 if for any reason the body 80 is pushed upwardly. As shown in Figure 4, the wall 66 includes a downwardly opening aperture or slot 66c between the bend locations of the legs 68, and the upper planar surface of the cap 84 (see 84c of Figure 4) will contact the lower edge of the slot 66c if the body 80 is forced upwardly a fraction of a millimeter. This interference between the nozzle cap 84 and the bracket 60 provides added nozzle body retention and makes the assembly 50 more robust and resistant to damage. The attached nozzle cap 84 closely adjacent the lower edge contacts the edge of 66c at 84c as the nozzle body 80 is urged upwardly and thereby transfers impact loading from the nozzle cap to the frame through the bracket 60 to prevent nozzle body damage. The relatively inexpensive cap 84 can be easily replaced if damaged and prevents damage to the more expensive nozzle body 80.

During assembly, the tabs 86a and 86b of the nozzle body 80 are inserted into the slots and slid downwardly into a final mounting position past the slot offsets 66b (Figure 7), and the nozzle cap 84 is attached. The casting 30 is secured to the opener frame 20 with the bolts 32 and 34. Before the bolt 34 is completely tightened, the bracket 60 is attached by sliding the slot 64 under the head of the bolt 34 and positioning the leg ends 70 against the mounting portion 40 (Figure 2). The bolt 34 is then fully tightened to secure the assembly 50 in the casting 30. Assembly and disassembly of the sprayer assembly on the opener frame is therefore very simple and convenient. The above-described assembly facilitates manufacture and servicing and requires only several parts.

Having described the preferred embodiment, it will become apparent that various modifications can be made without departing from the scope of the invention as defined in the accompanying claims.

## Claims

1. A sprayer assembly (50) for mounting on the frame (20) of an agricultural implement, **characterized in** comprising a bracket (60) with a slotted wall (66), a nozzle body (80) having projecting tab structure (86, 86a, 86b) for receipt in the slotted wall (66), and a single connector for securing the bracket (60) to the frame (20).

2. The sprayer assembly (50) as set forth in claim 1 wherein the tab structure (86, 86a, 86b) is moveable in the slotted wall (66) to an assembled position on the bracket (60).

3. The sprayer assembly (50) as set forth in claim 1 or 2 wherein the slotted wall (60) comprises parallel spaced slots (66a) receiving the tab structure (86, 86a, 86b), wherein the nozzle body (80) is moveable along the slots (66a) to a mounted position.

4. The sprayer assembly (50) as set forth in claim 2 or 3 wherein the slots (66a) include an offset (66b), the tab structure (86, 86a, 86b) slidable in the slot (66a) relative the offset (66b) and securing the nozzle body (80) in the mounted position when the tab structure (86, 86a, 86b) slides past the offset (66b).

5. The sprayer assembly (50) as set forth in one of the claims 2 to 4 further comprising a nozzle cap (84) attachable to the nozzle body (80) and/or removable from the nozzle body (80), the nozzle cap (84) when attached projects past a plane of the slotted wall (66) and limiting sliding movement of the nozzle body (80) along the slots (66a) away from the mounted position.

6. The sprayer assembly (50) as set forth in one of the claims 1 to 5, wherein the bracket (60) includes leg structure (68) projecting from the slotted wall (66) into contact with the frame (20) for stabilizing the bracket (60) and nozzle body (80).

7. The sprayer assembly (50) as set forth in claim 6 wherein the single connector comprises a single bolt (34) tightened against the bracket (60), the single bolt (34) and leg structure (68) providing substantially all the support of the bracket (60) and the nozzle body (80) relative to the frame (20).

8. The sprayer assembly (50) as set forth in claim 7 wherein the bracket (60) includes an upper wall (62) connected by the single bolt (34) to the frame (20) and lower leg structure (68) biased against the frame (20) to stabilize the bracket (60) and nozzle body (80).

9. The sprayer assembly (50) as set forth in claim 7 or 8 wherein the frame (20) includes a frame casting (30) bolted to the implement, and wherein the single bolt (34) also supports the frame casting (30).

10. The sprayer assembly (50) as set forth in one of the claims 1 to 9 wherein the frame (20) comprises a planter row unit frame.

11. The sprayer assembly (50) as set forth in claim 10 wherein the frame casting (30) defines a downwardly opening cavity (48), and the bracket (60) is contained within the cavity (48).

12. The sprayer assembly (50) as set forth in claim 1 wherein the bracket (60) includes first and second bracket portions (62, 68) extending laterally from opposite ends of the slotted wall (66), wherein the first bracket portion (62) is secured to the frame (20) by the single connector and the second bracket portion (68) is resilient and is biased against the frame (20).
